Europäisches Patentamt

European Patent Office

Office européen des brevets

(19)

(11) Veröffentlichungsnummer: **0 215 305**
**A2**

(12) **EUROPÄISCHE PATENTANMELDUNG**

(21) Anmeldenummer: 86111346.2

(22) Anmeldetag: 16.08.86

(51) Int. Cl.⁴: **H04Q 11/04** , H04Q 1/30 ,
H04L 11/20

(30) Priorität: 20.09.85 DE 3533524

(43) Veröffentlichungstag der Anmeldung:
25.03.87 Patentblatt 87/13

(84) Benannte Vertragsstaaten:
DE FR GB IT

(71) Anmelder: **International Standard Electric
Corporation**
**320 Park Avenue**
**New York New York 10022(US) FRGBIT**
Anmelder: **Standard Elektrik Lorenz
Aktiengesellschaft**
**Lorenzstrasse 10**
**D-7000 Stuttgart 40(DE) DE**

(72) Erfinder: **Illi, Dietrich, Dr.**
**Max-Brod-Weg 14**
**D-7000 Stuttgart 40(DE)**

(74) Vertreter: **Villinger, Bernhard, Dipl.-Ing. et al**
**Standard Elektrik Lorenz AG Patent- und
Lizenzwesen Postfach 300 929 Kurze Strasse
8**
**D-7000 Stuttgart 30(DE)**

(54) Verfahren und Vermittlungsstelle zum Vermitteln des Nachrichteninhalts von Datenpakete enthaltenden Kanälen.

(57) Bei der Bildung und Auflösung von Datenkanälen, die Datenpakete enthalten, die aus einer
Vielzahl von Sendestellen stammen und für eine
Vielzahl von Empfangsstellen bestimmt sind, kann
sich dort ein Engpaß ergeben, wo die einzelnen
Datenpakete zusammengeführt oder wieder verteilt
werden. Der Engpaß wird dadurch beseitigt, daß die
Datenpakete vor ihrer endgültigen Verteilung
gleichmäßig auf alle Verteilungseinrichtungen (CCT)
verteilt werden und durch zusätzliche Mittel (ATERI,
DSN2), die eine solche gleichmäßige Verteilung
ermöglichen.

Die Erfindung wird am Beispiel zentraler Zeichenkanäle beschrieben.

Fig.1

## Verfahren und Vermittlungsstelle zum Vermitteln des Nachrichteninhalts von Datenpakete enthaltenden Kanälen

Die Erfindung betrifft ein Verfahren zum Vermitteln des Nachrichteninhalts von Datenpakete enthaltenden Kanälen in einer Vermittlungsstelle nach dem Oberbegriff des Hauptanspruchs und eine Vermittlungsstelle nach dem Oberbegriff des Anspruchs 2 zum Durchführen eines solchen Verfahrens nach dem Oberbegriff des Hauptanspruchs.

Eine Sonderform von Nachrichten, die als Datenpakete zwischen einer Sendestelle und einer Empfangsstelle übertragen werden, sind Signalisierungsdaten, die unter anderem zum Auf-und Abbau von vermittelten Verbindungen erforderlich sind. Zur Übertragung solcher Datenpakete sind zwischen den beteiligten Vermittlungsstellen zentrale Zeichenkanäle vorgesehen. In jeder beteiligten Vermittlungsstelle sind die zu übermittelnden Datenpakete, die teils von anderen Vermittlungsstellen und teils von verschiedenen Ausgangspunkten der eigenen Vermittlungsstelle kommen, zu zentralen Zeichenkanälen zusammenzufassen und entsprechend die ankommenden Datenpakete wieder zu verteilen.

Die vorliegende Beschreibung stellt einschließlich der Darlegung der Problemstellung die Erfindung am Beispiel zentraler Zeichenkanäle dar. Die Erfindung ist aber gleichermaßen dort anwendbar, wo andersartige Datenpakete in Kanälen gebündelt übertragen werden.

Das 1981 erschienene Doppelheft Nr. 2/3 des Bandes 56 der Zeitschrift Elektrisches Nachrichtenwesen beschreibt das Vermittlungssystem "System 12" der ITT. Auf den Seiten 264 bis 273 beschreiben B.Rossi und F.Harens die "Anwendung des CCITT-Zentralkanal-Zeichengabeverfahrens Nr. 7" in diesem Vermittlungssystem.

Es hat sich gezeigt, daß bei der Verarbeitung der zentralen Zeichenkanäle in der Art, wie er in der oben genannten Zeitschrift beschrieben ist, eine Überlastung der dafür vorgesehenen Teile der Vermittlungsstelle auftreten kann. In dem Maß, wie die zentralen Zeichenkanäle wegen Überlastung nicht ausgewertet werden können, ist aber die Vermittlungsstelle lahmgelegt. Hier soll die Erfindung Abhilfe schaffen. Dies erfolgt durch ein Verfahren nach der Lehre des Hauptanspruchs und durch eine Vermittlungsstelle nach der Lehre des Anspruchs 2. Weitere vorteilhafte Ausgestaltungen der Erfindung sind der Beschreibung zu entnehmen.

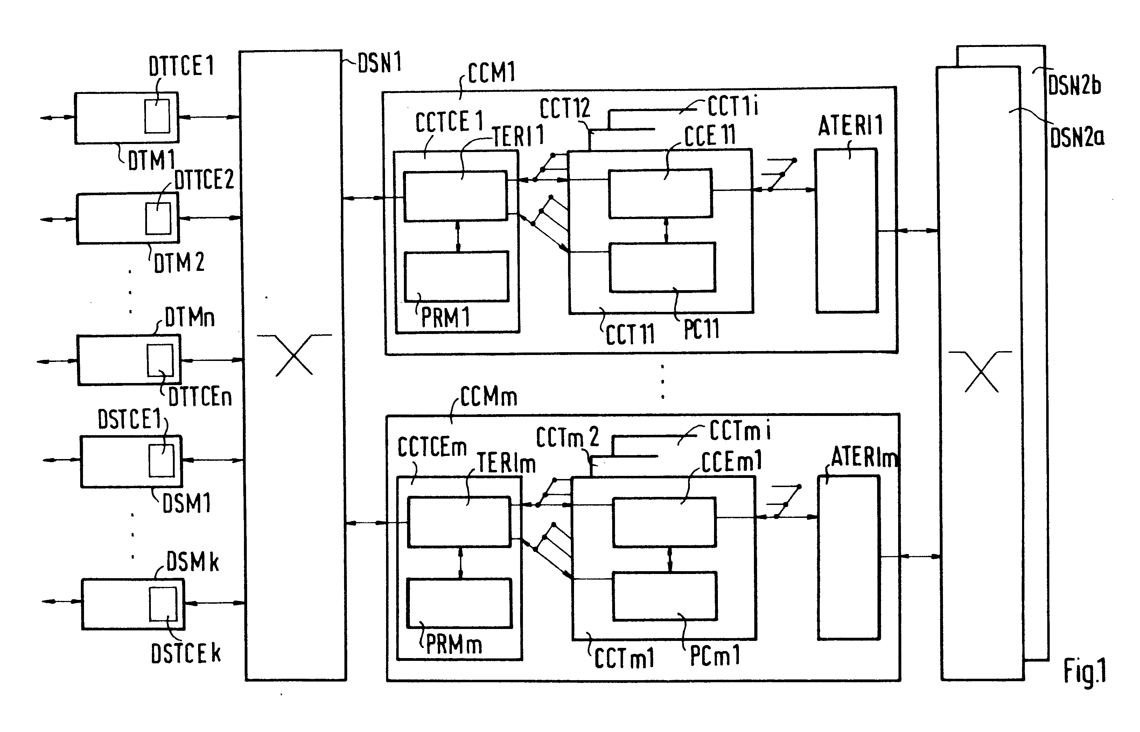

Die Beseitigung der Überlastungsgefahr setzt zunächst voraus, daß deren genaue Ursache erkannt wird. Hierzu wird zunächst die in Figur 1 dargestellte Vermittlungsstelle so weit beschrieben, wie sie mit dem in der oben genannten Zeitschrift beschriebenen Stand der Technik übereinstimmt. Kern der Vermittlungsstelle ist ein Digital-Koppelnetz DSN1 (Digital Switching Network). An dieses Koppelnetz ist eine Vielzahl von Anschlußmodulen angeschlossen. Eingezeichnet sind Anschlußmodule für Digital-Verbindungsleitungen DTM1, DTM2 und DTMn (Digital Trunk Module), Anschlußmodule für Digital-Teilnehmer DSM1 und DSMk (Digital Subscriber Module) und Anschlußmodule für zentrale Zeichenkanäle CCM1 und CCMm (Common Channel Module). Weitere gleichartige Anschlußmodule sind angedeutet. Durch dem Fachmann geläufige Maßnahmen (z.B. Modems) ist die Erfindung auch auf Vermittlungssysteme mit Anschlußmodulen für Analog-Verbindungsleitunqen anwendbar. Gleiches gilt für die Anschlußmodule für Teilnehmer. Weiter kann eine Vielzahl andersartiger Anschlußmodule, die ebenfalls für die Erfindung ohne Bedeutung sind, angeschlossen sein. Näheres kann dem eingangs erwähnten Zeitschriftenheft entnommen werden.

Jeder Anschlußmodul enthält eine Modulsteuereinheit TCE (Terminal Control Element), z.B. DTTCE1 bis DTTCEn, DSTCE1 bis DSTCEk und CCTCE1 bis CCTCEm. Sämtliche Funktionen eines jeden Anschlußmoduls werden durch die jeweils zugehörige Modulsteuereinheit gesteuert. Die Modulsteuereinheiten TCE tauschen über das Digital-Koppelnetz DSN1 Informationen aus. Diese Informationen gehen damit über Übertragungskanäle der gleichen Art wie alle anderen Nachrichteninhalte, beispielsweise Ferngespräche, d.h. mit 64 kbit/s. Zum Austausch von Informationen mit anderen Vermittlungsstellen werden zentrale Zeichenkanäle nach CCITT Nr. 7 verwendet. Diese zentralen Zeichenkanäle kommen und gehen über die Anschlußmodule für Digital-Verbindungsleitungen DTM. Jedem zentralen Zeichenkanal ist ein Zentralkanal-Anschlußteil CCT - (Common Channel Terminal) zugeordnet. Beim Stand der Technik sind je zwei zentrale Zeichenkanäle einem Zentralkanal-Anschlußteil CCT zugeordnet. Die Zuordnung ist semipermanent; sie wechselt nur bei Störungen oder äußeren Eingriffen, wozu weitere Zentralkanal-Anschlußteile CCT in Reserve vorhanden sind, auf die dann umgeschaltet wird. Bis zu 16 solcher Zentralkanal-Anschlußteile CCT sind in einem Anschlußmodul für zentrale Zeichenkanäle CCM zusammengefaßt und werden von der jeweiligen Modulsteuereinheit für zentrale Zeichenkanäle CCTCE gesteuert. Der Nachrichteninhalt eines jeden zentralen Zeichenkanals besteht aus einer Vielzahl aufeinanderfolgender Informationen, die jeweils an einen anderen Empfänger gerichtet sein können. Als Empfänger solcher Informationen kommen einerseits andere Vermittlungsstellen in Frage und andererseits sämtliche Modulsteuereinheiten der eigenen Vermittlungsstelle, insbesondere die Modulsteuereinheiten in den Anschlußmodulen für Digital-Teilnehmer DSM und für Digital-Verbindungsleitungen DTM. Die für andere Vermittlungsstellen bestimmten Informationen müssen jeweils einem bestimmten Zeichenkanal und damit dem diesem Zeichenkanal zugeordneten Zentralkanal-Anschlußteil CCT zugeführt werden.

Sämtliche Informationen, die in einem fortlaufenden Datenstrom über einen zentralen Zeichenkanal einlaufen, müssen einzeln innerhalb der Vermittlungsstelle weitergegeben werden. Für jede Information, die über das Digital-Doppelnetz DSN1 läuft, muß zunächst eine Verbindung auf-und anschließend wieder abgebaut werden. Zum Verbindungsauf-und -abbau ist zusätzliche Information erforderlich, die ebenfalls an das Digital-Koppelnetz DSN1 gegeben werden muß. Da der zentrale Zeichenkanal über eine semipermanente Verbindung von einer Verbindungsleitung über ein Anschlußmodul für Digital-Verbindungsleitungen DTM zu einem Zentralkanal-Anschlußteil CCT geführt wird, wozu kein ständiger Auf-und Abbau von Verbindungen erforderlich ist, ist die zum Empfang der Information eines zentralen Zeichenkanals erforderliche Übertragungskapazität deutlich geringer als die zum Verteilen dieser Information innerhalb der Vermittlungsstelle erforderliche Übertragungskapazität. Dieses Problem wird dadurch noch erheblich verstärkt, daß diejenigen Informationen, die für die eigene Vermittlungsstelle bestimmt sind, jeweils in eine Mehrzahl einzelner systeminterner Steuerbefehle aufgespalten wird. Die Übertragungskapazität zwischen einem Anschlußmodul CCM und dem Digital-Koppelnetz DSN1 wird einerseits durch die Übertragungskapazität der dazwischenliegenden Übertragungskanäle begrenzt und andererseits durch die Kapazität der Modulsteuereinheit für zentrale Zeichenkanäle CCTCE, die nicht beliebig oft einen Verbindungsauf-und -abbau pro Zeiteinheit steuern kann. Eine Modulsteuereinheit für zentrale Zeichenkanäle CCTCE besteht jeweils aus einer Zugangseinheit TERI (TERminal Interface), über die die Verbindungen laufen und einem Prozessor PRM (micro-PRozessor/Memory), der den Verbindungsauf-und -abbau ebenso wie den gesamten Anschlußmodul für zentrale Zeichenkanäle CCM steuert. Bei starker Auslastung eines Zeichenkanals, insbesondere bei einem großen Anteil für die eigene Vermittlungsstelle bestimmter Informationen, kann diese Übertragungskapazität nicht mehr ausreichen. Der Prozessor PRM führt auch die Umwandlung von Informationen, die über einen zentralen Zeichenkanal ankommen, in interne Steuerbefehle und umgekehrt durch. EinerÜberlastung des Processors PRM könnte durch geeigneten Aufbau des Prozessors selbst vorgebeugt werden. Die Verbindung des Prozessors PRM mit seiner Umwelt bliebe aber ein Engpaß. Hier schafft die Erfindung Abhilfe.

Einerseits werden die zur Umsetzung in Steuerbefehle für Modulsteuereinheiten DTTCE, DSTCE, CCTCE der eigenen Vermittlungsstelle bestimmten Informationen nach einem vorgegebenen Schlüssel auf die vorhandenen Zentralkanal-Anschlußteile CCT verteilt (Anspruch 1), andererseits wird gemäß der Erfindung zusätzliche Übertragungskapazität zwischen den vorhandenen Zentralkanal-Anschlußteilen CCT geschaffen - (Anspruch 2), wodurch auch erreicht wird, daß der zur Aufteilung erforderliche Informationsaustausch nicht zu einem erneuten Engpaß führt. Damit kann nicht nur die Belastung gleichmäßig verteilt werden, die Belastung pro Zentralkanal-Anschlußteil CCT kann auch durch Einsatz weiterer Zentralkanal-Anschlußteile CCT, die nicht an einen zentralen Zeichenkanal angeschlossen sind, reduziert werden.

Im folgenden wird die Erfindung anhand von Ausführungsbeispielen unter Zuhilfenahme der beiliegenden Zeichnung weiter erläutert:

Figur 1 zeigt eine erfindungsgemäß aufgebaut Vermittlungsstelle, und

Figur 2 zeigt einen Ausschnitt einer erfindungsgemäßen Vermittlungsstelle im Detail.

Die in Figur 1 gezeigte Vermittlungsstelle wurde schon, soweit sie mit dem Stand der Technik übereinstimmt, in der Einleitung beschrieben. Hinzugefügt ist nun in jedem Anschlußmodul für zentrale Zeichenkanäle CCM eine zusätzliche Zugangseinheit ATERI (Additional TERminal Interface) sowie zwei zusätzliche Digital-Koppelnetze DSN2a und DSN2b. Außerdem sind die Zentralkanal-Anschluß teile CCT anders aufgebaut. Sie weisen jeweils eine Zentralkanal-Steuereinheit CCE - (Channel Control Element) und ein Protokollteil PC (Protocol Circuit) auf. Der Zeichnung ist nicht zu entnehmen, daß die Zahl der Zentralkanal-Anschlußteile CCT, die nicht in Reserve stehen, größer sein kann, als die Zahl der zu bedienenden zentralen Zeichenkanäle. Bei der Erfindung kann auf in Reserve stehende Zentralkanal-Anschlußteile CCT sogar verzichtet werden, wenn in Kauf genommen wird, daß im Störungsfall die Arbeit des gestörten Zentralkanal-Anschlüßteiles CCT durch Änderung des Verteilschlüssels auf alle übrigen aufgeteilt und die etwas längere Umschaltzeit akzeptiert wird.

Jeder zentrale Zeichenkanal, der von einem Anschlußmodul für Digital-Verbindungsleitungen DTM ausgeht, wird über je eine semipermanente Verbindung für jede Richtung durch das Digital-Koppelnetz DSN1, die Zugangseinheit TERI des ausgewählten Anschlußteils für zentrale Zeichenkanäle CCM und das Protokollteil PC des ausgewählten Zentralkanal-Anschlußteils CCT mit der zugehörigen Zentralkanal-Steuereinheit CCE verbunden. Die Zuordnung eines zentralen Zeichenkanals zu einer Zentralkanal-Steuereinheit CCE ist semipermanent.

Das Protokollteil PC dient der Gewährleistung einer sicheren Übertragung auf dem zentralen Zeichenkanal; es erfüllt insbesondere die Funktionen der Schicht 2 des bekannten OSI-Schichtenmodells.

Die Zentralkanal-Steuereinheit CCE leitet vom Protokollteil PC kommende Informationen an den zugeordneten Prozessor PRM oder an eine andere Zentralkanal-Steuereinheit CCE weiter und umgekehrt.

Jede Zentralkanal-Steuereinheit CCE steht weiter über die zusätzliche Zugangseinheit ATERI und das Digital-Koppelnetz DSN2a mit allen anderen Zentralkanal-Steuereinheiten CCE in Verbindung. Die zusätzliche Zugangseinheit ATERI ist prinzipiell gleich aufgebaut, wie die ohnehin vorhandene Zugangseinheit TERI.

Das Digital-Koppelnetz DSN2a ist, im Gegensatz zum Digital-Koppelnetz DSN1, nur einstufig aufgebaut, d.h., von jedem Eingang existiert genau ein Weg zu jedem Ausgang. Aus Zuverlässigkeitsgründen ist es deshalb durch das Digital-Koppelnetz DSN2b gedoppelt. Der Verbindungsaufbau in diesem (sehr kleinen) Digital-Koppelnetz DSN2a erfolgt wesentlich schneller als im - (Haupt-)Digital-Kopplnetz DSN1. Da die Zeit für den ständigen Auf-und Abbau von Verbindungen mitverantwortlich war für die beim Stand der Technik auftretenden Engpässe, ist durch das zusätzliche Digital-Koppelnetz DSN2a, das letztlich nur ein einzelner Koppelnetzbausein ist, die Gefahr einer Überlastung sehr stark reduziert.

Ein geeignetes Verfahren zum Verarbeiten des Nachrichteninhalts zentraler Zeichenkanäle hilft weiter, der Gefahr einer Überlastung entgegenzuwirken. Dieses Verfahren ist auch bei einer Vermittlungsstelle nach dem Stand der Technik anwendbar, kommt aber erst richtig zum Tragen, wenn, wie beschrieben, zusätzliche Übertragungskapazitäten geschaffen sind. Jeder zentrale Zeichenkanal wird in einer semipermanenten Verbindung zu einem Zentralkanal-Anschlußteil CCT, beispielsweise dem Zentralkanal-Anschlußteil CCT11, geführt. Die zur Weitergabe an eine fremde Vermittlungsstelle in einem zweiten zentralen Zeichenkanal bestimmten Informationen werden nun von dem dem ersten zentralen Zeichenkanal zugeordneten Zentralkanal-Anschlußteil CCT11 und damit von der Zentralkanal-Steuereinheit CCE11 an das dem zweiten zentralen Zeichenkanal zugeordnete Zentralkanal-Anschlußteil CCT, beispielsweise das Zentralkanal-Anschlußteil CCTm2, und damit die Zentralkanal-Steuereinheit CCEm2 übermittelt. Von dieser Zentralkanal-Steuereinheit CCEm2 geht nun der zweite zentrale Zeichenkanal über eine semipermanente Verbindung ab. Die für Modulsteuereinheiten der eigenen Vermittlungsstelle, beispielsweise die Modulsteuereinheiten für Digital-Verbindungsleitungen DTTCE, Modulsteuereinheiten für Digital-Teilnehmer DSTCE und Modulsteuereinheiten für zentrale Zeichenkanäle CCTCE, bestimmten Informationen werden nach einem vorgegebenen Schlüssel auf die vorhandenen Zentralkanal-Anschlußteile CCT verteilt. Diese Verteilung erfolgt über die zusätzlichen Zugangseinheiten ATERI und das Digital-Koppelnetz DSN2. Die Übertragungskapazität zwischen dem Digital-Koppelnetz DSN1 und den Anschlußmodulen für zentrale Zeichenkanäle CCM wird hierfür nicht ausgenützt. Die Aufteilung auf Modulsteuereinheiten der eigenen Vermittlungsstelle erfolgt nun in der Zentralkanal-Steuereinheit CCE des ausgewählten Zentralkanal-Anschlußteils CCT. Für die an die einzelnen Modulsteuereinheiten weiterzugebenden Steuerbefehle wird mehr Übertragungskapazität benötigt als für die Information, aus der diese Steuerbefehle abgeleitet wurden. Da diese Übertragungskapazität aber nahezu beliebig stark aufgeteilt werden kann, kann sie auch für das einzelne Modul nahezu beliebig reduziert werden. Kommt beispielsweise über einen zentralen Zeichenkanal vorzugsweise Information, die für andere Vermittlungsstellen bestimmt ist (Transit-Verkehr) und über einen zweiten zentralen Zeichenkanal vorzugsweise solche Information, die für die eigene Vermittlungsstelle bestimmt ist (End-Verkehr), so ergibt sich dadurch eine Entlastung, daß diese beiden zentralen Zeichenkanäle Zentralkanal-Anschlußteilen CCT zugeordnet werden, die in verschiedenen Anschlußmodulen für zentrale Zeichenkanäle CCM enthalten sind und daß die für die eigene Vermittlungsstelle bestimmten Nachrichten über das Digital-Koppelnetz DSN2 auf die beiden beteiligten Zentralkanal-Anschlußteile aufgeteilt werden. Außerdem ist es möglich, Zentralkanal-Anschlußteile CCT einzusetzen, denen kein zentraler Zeichenkanal zugeordnet ist und die ausschließlich der Bearbeitung der für die eigene Vermittlungsstelle bestimmten Information (End-Verkehr) dienen. Auch dadurch kann die erforderliche Übertragungskapazität pro Anschlußmodul für zentrale Zeichenkanäle CCM reduziert werden. Der Verteilschlüssel ist so gewählt, daß jedem Teil der Vermittlungsstelle ein Zentralkanal-Anschlußteil zugeordnet ist.

Die Aufteilung der zur Umsetzung in Steuerbefehle der eigenen Vermittlungsstelle bestimmten Informationen auf de verschiedenen Anschlußmodule für zentrale Zeichenkanäle CCM kann auch dadurch erfolgen, daß die einzelnen Anschlußmodule für zentrale Zeichenkanäle CCM untereinander durch semipermanente Verbindungen verbunden sind. Durch die fehlende Notwendigkeit ständigen Verbindungsauf-und -abbaus kann hier mit vergleichsweise wenig Übertragungskapazität eine gleichmäßige Ausnutzung der insgesamt vorhandenen Übertragungskapazität erreicht werden. Dies ist auch ohne Zuhilfenahme des zusätzlichen Digital-Koppelnetzes DSN2 möglich. Innerhalb eines jeden Anschlußmoduls für zentrale Zeichenkanäle CCM werden diese Inforamtionen zunächst auf die einzelnen Zentralkanal-Steuereinheiten CCE aufgeteilt, von denen jede mit einem oder zwei anderen Anschlußmodulen für zentrale Zeichenkanäle CCM in semipermanenter Verbindung steht.

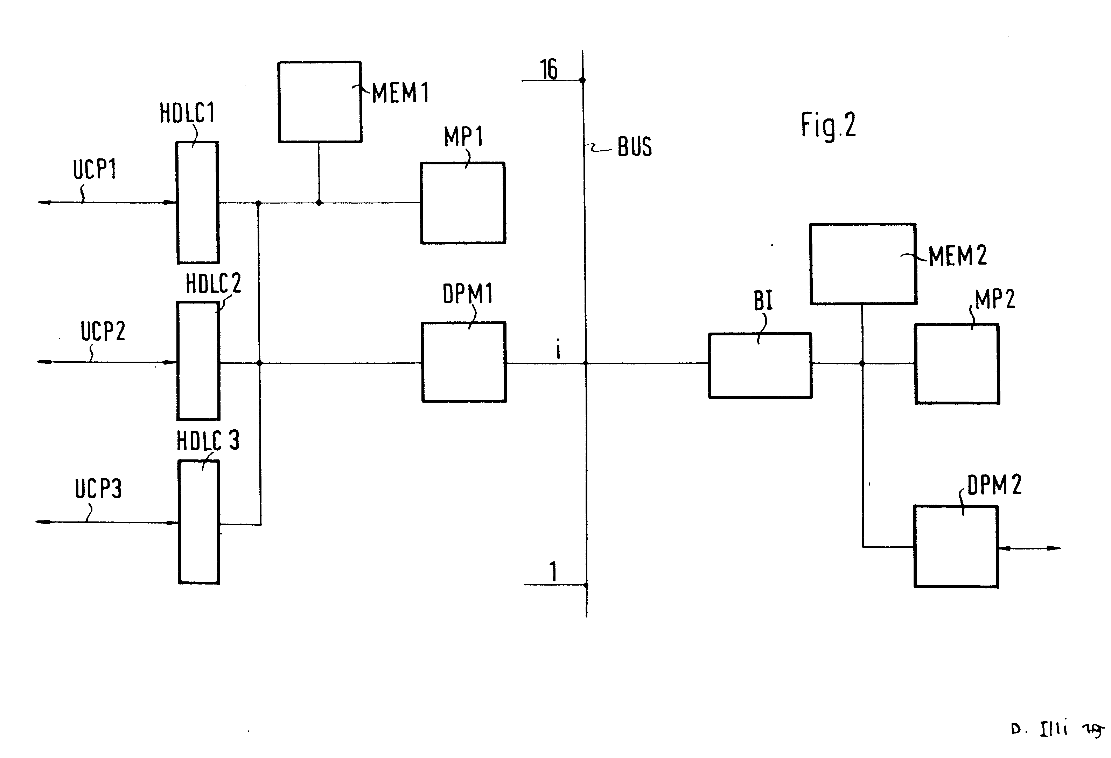

Anhand der Figur 2 werden nun Einzelheiten der zuletzt erwähnten Ausführungsform beschrieben, bei der die einzelnen Anschlußmodule für zentrale Zeichenkanäle CCM untereinander durch semipermanente Verbindungen verbunden sind. Jede Zentralkanal-Steuereinheit CCE enthält drei HDLC-Protokollteile HDLC1 bis HDLC3, einen Arbeitsspeicher MEM1, einen Mikroprozessor MP1 und einen Verbindungsspeicher DPM1 (Dual Port Memory). Die HDLC-Protokollteile HDLC1 bis HDLC3 verarbeiten jeweils einen ankommenden und einen abgehenden semipermanenten Datenkanal und damit insgesamt jeweils eine semipermanente Verbindung UCP1 bis UPC3 (User Controlled Path). Die erste dieser semipermanenten Verbindungen UCP1 ist ein zentraler Zeichenkanal. Durch die beiden anderen semipermanenten Verbindungen UCP2 und UCP3 werden Verbindungen zu anderen Anschlußmodulen für zentrale Zeichenkanäle CCM hergestellt. HDLC-Protokollteile sind als solche dem Fachmann geläufig. Der Arbeitsspeicher MEM1 ist ein Halbleiterspeicher üblicher Bauart mit etwa 100 kbit Speicherumfang. Der Mikroprozessor MP1 ist ein handelsüblicher Mikrorpozessor vom Typ 80 186. Der Verbindungsspeicher DPM1 ist einerseits über Adress-und Datenleitungen mit den HDLC-Protokollteilen HDLC1 bis HDLC3, dem Arbeitsspeicher MEM1 und dem Mikroprozessor MP1 verbunden und andererseits über unabhängige Adress-und Datenleitungen mit einem allen Zentralkanal-Steuereinheiten CCE eines Anschlußmoduls für zentrale Zeichenkanäle CCM gemeinsamen Bus BUS. Auch solche Verbindungsspeicher DPM sind dem Fachmann bekannt.

An einen solchen Bus BUS sind nun bis zu 16 Zentralkanal-Steuereinheiten CCE angeschlossen. Über die verschiedenen HDLC-Protokollteile sind damit von einem Bus BUS bis zu 16 zentrale Zeichenkanäle und bis zu 32 weitere Anschlußmodule für zentrale Zeichenkanäle erreichbar.

Der Bus BUS ist über eine Anschlußschaltung BI (Bus Interface) und einen Verbindungsspeicher DPM2 mit dem Prozessor PRM verbunden. Über diese Verbindung laufen einerseits Zentralkanal-Informationen (vom Protokollteil PC über die Zentralkanal-Steuereinheit CCE zum Prozessor PRM und umgekehrt) und andererseits Informationen über die semipermanente Aufgabenverteilung auf die verschiedenen Zentralkanal-Steuereinheiten CCE. Die Informationen über die Aufgabenverteilung werden im Arbeitsspeicher MEM1 abgespeichert. Die Verbindung zwischen dem Bus BUS und dem Prozessor PRM wird von einem Mikroprozessor MP2 mit einem zugehörigen Arbeitsspeicher MEM2 gesteuert. Der Mikroprozessor MP2 ist ebenfalls vom Typ 80 186, der Arbeitsspeicher MEM2 ist ein Halbleiterspeicher mit etwa 64 kbit.

## Ansprüche

1. Verfahren zum Vermitteln des Nachrichteninhalts von Datenpakete enthaltenden Kanälen, insbesondere von zentralen Zeichenkanälen, in einer Vermittlungsstelle, die ein Digital-Koppelnetz, Anschlußmodule für Verbindungsleitungen zu anderen Vermittlungsstellen, in Anschlußmodulen enthaltene Datenpaketkanal-Baugruppen für das Verarbeiten des Nachrichteninhaltes von Datenpakete enthaltenden Kanälen und eine feste Anzahl von Übertragungskanälen mit vorgegebener maximaler Übertragungskapazität zwischen jedem Anschlußmodul und dem Digital-Koppelnetz aufweist, bei dem jedem Datenpakete enthaltenden Kanal eine Datenpaketkanal-Baugruppe zugeordnet wird und bei dem die in einem ersten,Datenpakete enthaltenden Kanal ankommenden und zur Weitergabe an eine fremde Vermittlungsstelle in einem zweiten,Datenpakete enthaltenden Kanal bestimmten Informationen von der dem ersten,Datenpakete enthaltenden Kanal zugeordneten Datenpaketkanal-Baugruppe an die dem zweiten,Datenpakete enthaltenden Kanal zugeordnete Datenpaketkanal-Baugruppe übermittelt wird, **dadurch gekennzeichnet,** daß die nicht für fremde Vermittlungsstellen bestimmten Informationen nach einem vorgegebenen Schlüssel auf die vorhandenen Datenpaketkanal-Baugruppen (CCT) verteilt werden.

2. Vermittlungsstelle mit einem Digital-Koppelnetz, mit Anschlußmodulen für Verbindungsleitungen zu anderen Vermittlungsstellen, mit in Anschlußmodulen enthaltenen Datenpaketkanal-Baugruppen für das Verarbeiten des Nachrichteninhalts von Datenpakete enthaltenden Kanälen und mit einer festen Anzahl von Übertragungskanälen mit vorgegebener maximaler Übertragungskapazität zwischen jedem Anschlußmodul und dem Digital-Koppelnetz, dadurch gekennzeichnet, daß Einrichtungen (ATERI, DSN2, BUS) vorhanden sind, die zusätzliche Übertragungskapazität zwischen den vorhandenen Datenpaketkanal-Baugruppen - (CCT) schaffen.

Fig.1

0 215 305

Fig.2

0 215 305

D. Illi 79